## Europäisches Patentamt
## European Patent Office
## Office européen des brevets

(11) Veröffentlichungsnummer: **0 056 862**
A2

(12) # EUROPÄISCHE PATENTANMELDUNG

(21) Anmeldenummer: **81110447.0**

(22) Anmeldetag: **15.12.81**

(51) Int. Cl.³: **H 05 B 7/101**
**H 05 B 7/085**

(30) Priorität: **28.01.81 DE 3102776**

(43) Veröffentlichungstag der Anmeldung:
**04.08.82 Patentblatt 82/31**

(84) Benannte Vertragsstaaten:
**AT BE CH DE FR IT LI LU NL SE**

(71) Anmelder: **C. CONRADTY NÜRNBERG GmbH & Co KG**
**Grünthal 1-6**
**D-8505 Röthenbach a.d. Pegnitz(DE)**

(72) Erfinder: **Zöllner, Dieter H., Dr.**
**Claremorris**
**County Mayo Clare(IE)**

(72) Erfinder: **Rittmann, Friedrich**
**Am Buck 18**
**D-8501 Rückersdorf b.Nürnberg(DE)**

(72) Erfinder: **Dung, Herbert**
**Tiefenweg 4**
**D-4600 Dortmund 30(DE)**

(72) Erfinder: **Haremsa, Johannes**
**Sandforthsweg 23**
**D-4690 Herne(DE)**

(72) Erfinder: **Bauer, Georg, Dr.**
**Platanenweg 21**
**D-5810 Witten-Bommern(DE)**

(72) Erfinder: **Otto, Josef, Dr.**
**Am Wasserturm 5**
**D-5802 Wetter 4(DE)**

(72) Erfinder: **Mühlenbeck, Josef**
**Columbusstrasse 1**
**D-5802 Wetter 4(DE)**

(72) Erfinder: **Lauterbach-Dammler, Inge, Dr.**
**Peter-Vischer-Strasse 15**
**D-8500 Nürnberg(DE)**

(74) Vertreter: **Füchsle, Klaus, Dipl.-Ing. et al,**
**Hoffmann . Eitle & Partner Patentanwälte**
**Arabellastrasse 4**
**D-8000 München 81(DE)**

(54) **Elektrode für Lichtbogenöfen.**

(57) Eine Elektrode für Lichtbogenöfen, insbesondere zur Elektrostahlerzeugung aus einem oberen Abschnitt (5) aus Metall und einem ersetzbaren unteren Abschnitt (6) aus sich verbrauchendem bzw. langsam sich verbrauchendem Material, die durch einen Schraubnippel (1) oder dergleichen miteinander verbunden sind, wobei der obere Abschnitt eine Flüssigkeits-Kühleinrichtung mit einem Vorlaufkanal (2) und einem Rücklaufkanal (3) aufweist und der obere Abschnitt (5) zumindest teilweise, vorzugsweise in dessen unterem Bereich, einen Schutzüberzug aufweist, wobei der Schutzüberzug einen lösbar aufgesetzten Mantel (4) aus mechanisch resistentem Material darstellt, das elektrisch leitfähig ist. Der Mantel kann in Einzelsegmente unterteilt sein, wobei die Ausbildung von aufgeschraubten Einheiten mit innenliegenden Ausnehmungen zur Aufnahme elastischen, elektrisch leitfähigen Materials besonders günstige Eigenschaften zeigt.

EP 0 056 862 A2

./...

FIG.1

## Elektrode für Lichtbogenöfen

Die Erfindung betrifft eine Elektrode für Lichtbogenöfen aus einem oberen Abschnitt aus Metall
und einem ersetzbaren unteren Abschnitt aus sich
verbrauchendem bzw. langsam sich verbrauchendem
Material, die durch einen Schraubnippel oder dergleichen miteinander verbunden sind, wobei der
obere Abschnitt eine Flüssigkeits-Kühleinrichtung
mit einem Vorlaufkanal und einem Rücklaufkanal
aufweist und der obere Abschnitt zumindest teilweise, vorzugsweise in dessen unterem Bereich,
einen Schutzüberzug aufweist.

Derartige Elektroden sind bereits aus der BE-PS
867 876 bekannt. Bei den dort beschriebenen Elektroden ist der Metallschaft, der das Kühlsystem
enthält, durch eine aussenliegende hochtemperaturbeständige Masse überzogen. Hierbei handelt es
sich offensichtlich um eine kontinuierliche Beschichtung, zu deren Haftungsverbesserung Haken
im Metallschaft eingezogen sind.

Ähnliche Elektroden sind auch aus der GB-PS
1 223 162 bekannt, bei denen der gesamte Metallschaft mit einer schützenden keramischen Beschichtung beaufschlagt ist. Nach dieser Lösung wird
darauf geachtet, dass die keramische Beschichtung
in möglichst geringer Stärke vorliegt und auch in den Metallschaft selbst zur Isolierung der dort laufenden Rohre zu erheblichem Anteil eindringt. Diese Rohre stellen gleichzeitig die Kühlwasserführung als auch die elektrische Verbindung zu dem Verbrauchselektrodenteil aus Graphit dar.

Schliesslich ist in der europäischen Patentanmeldung 79 302 809.3 eine Elektrode beschrieben, bei der der seitlich aussenliegende metallische Kontakt des Metallschaftes gegenüber dem innenliegenden metallischen Kühlungssystem isolierend gelagert ist. Im unteren Teil des metallischen Kühlungsschaftes ist dann wiederum eine mit Haken gesicherte keramische Beschichtung vorgesehen, die sich bis auf etwa die Höhe der Schraubnippelverbindung erstreckt.

Elektroden für Lichtbogenöfen sind starker Beanspruchung ausgesetzt. Dies erklärt sich aus den hohen Arbeitstemperaturen, z.B. bei der Elektrostahlherstellung, bei der solche Elektroden am häufigsten eingesetzt werden. Durch die Betriebsbedingungen innerhalb des Ofens und durch den Lichtbogen, der nur im Idealfall an der unteren Elektrodenspitze in die Schmelze führt, ergeben sich Verluste durch Seitenoxidation. Schliesslich besteht die Gefahr der Wanderung oder der seitlichen Ansetzung des Lichtbogens, die auch oberhalb des Verbrauchsteiles erfolgen kann und zu Kurzschlüssen führt. Darüber hinaus sind die Elektroden unterschiedlichen Temperaturen im Vorlauf und Rücklauf des Kühlmittels sowie im Bereich des Verbrauchsteiles gegenüber der Stromzuführungs- und Kühlungseinheit unterworfen. Eine besonders gefährdete Stelle stellt hierbei der Bereich des Schraubnippels dar. Beim Einfahren der Elektroden und durch in die Schmelze einrutschende Schrotteile, ergeben sich zusätzlich erhebliche mechanische Belastungen.

Es sind auch bereits Elektroden für Lichtbogenöfen mit einem am Elektrodentragarm befestigten, flüssigkeitsgekühlte Metallteile enthaltenden Mantel und mit einem im Mantel axial verschiebbaren Kern in der DE-AS 27 30 884 beschrieben worden. Bei der dort beschriebenen Elektrode ist der an dem Elektrodentragarm befestigte Mantel gegenüber dem durchzuschiebenden Kern durch eine Isolierschicht zwischen Mantel und Kern gekennzeichnet und es ist im unteren Teil des Mantels eine Vorrichtung zur Erzeugung eines Magnetfeldes vorgesehen. Elektroden dieses Typs weisen verschiedene Nachteile auf. Diese beruhen einerseits auf der sich ergebenden "Kaminwirkung" durch die ein Seitenabbrand, wenn auch dieser gegenüber herkömmlichen Graphitelektroden vermindert ist, bewirkt wird. Auch wird die Temperatur über einen längeren Bereich innerhalb der Durchschubelektrode wirksam, wodurch sich die Oxidationsempfindlichkeit des Graphites erhöht. Schliesslich erfordert der Betrieb solcher Elektroden eine relativ hohe Energiezufuhr.

Weiterhin sind flüssigkeitsgekühlte Halterungen
für die Spitze einer Elektrode aus der DE-AS
28 45 367 bekannt, bei der ein Hitzeschirm aus
einem Metallrohr vorgesehen ist, das gegenüber
dem stromführenden Kühlsystem elektrisch isoliert und über eine zwischen dem Kühlsystem und
dem Metallrohr eingestampfte oder eingegossene
Feuerfestmasse gekühlt ist. Das aaO beschriebene
Metallrohr ist bereits aus der DE-PS 807 312 vorbekannt. Durch die Einstampfung bzw. Vergiessung
des Raumes zwischen Metallrohr und Kühlsystem mit
Feuerfestmasse gemäss DE-AS 28 45 367 und die
daraus resultierende unlösbare Verbindung ergeben
sich unter anderem erhebliche Nachteile bei auftretenden Thermoschocks und bei Wartungs- bzw.
Reparaturarbeiten.

Aufgrund der hohen Beanspruchung der Elektroden bedürfen diese der ständigen Verbesserung. Dementsprechend liegt der Erfindung die Aufgabe zugrunde, Elektroden hoher Arbeitssicherheit mit geringem Strom- und Spannungsabfall in der Zuführung zu schaffen, die möglichst wenig störungsanfällig, aber auch herstellungs- und reparaturfreundlich sind. Die Elektroden sollen insbesondere im Falle der unerwünschten Verschiebung des Lichtbogens, selbst im Falle von Teilbeschädigungen eine Weiterführung des Elektrodenbetriebs in gegenüber herkömmlichen Elektroden verbesserter Weise gestatten.

Diese Aufgabe wird durch eine Elektrode der eingangs genannten Art gelöst, die dadurch gekennzeichnet ist, dass der Schutzüberzug einen lösbar aufgesetzten Mantel aus mechanisch resistentem Material darstellt, das elektrisch leitfähig ist.

Die Erfindung baut unter anderem auf der Erkenntnis auf, dass durch den Einsatz eines lösbar aufgesetzten Mantels, der aus mechanisch resistentem Material gebildet ist, besonders robuste Elektrodentypen zur Verfügung gestellt werden können, auf deren andere Vorteile noch eingegangen wird. Es hat sich insbesondere gezeigt, dass ein ausreichender sowohl mechanischer als auch thermischer Schutz des oberen Abschnitts aus relativ niedrig schmelzendem, hochleitfähigen Metall am günstigsten durch die Wahl eines lösbar aufgesetzten Mantels erreicht wird, der mechanisch widerstandsfähig und elektrisch leitfähig ist. Die bisher überwiegend eingeschlagenen Wege des Schutzes des empfindlichen Metallschaftes von Kombinationselektroden, nämlich die direkte Auflage isolierender, keramischer Schichten auf dem Übergangsbereich des wassergekühlten Metallschaftes zum Aktivteil aus Graphit, können den während des Betriebes der Elektroden auftretenden besonderen Beanspruchungen, insbesondere den thermischen Wechselbeanspruchungen, den Hochtemperaturbelastungen und insb. Thermoschock bei gleichzeitiger mechanischer Robustheit nicht entsprechen. Durch die Wahl elektrisch leitfähiger, mechanisch robuster Materialien, die lösbar aufgesetzt werden, ergibt sich hier eine spürbare Verbesserung.

Vorteilhafte Ausbildungen der erfindungsgemässen Elektrode ergeben sich aus den Unteransprüchen.

Erfindungsgemäss ist es möglich, den Mantel auf dem elektrischen Potential der Elektrode zu halten. Dies kann beispielsweise durch direkte Auflage des Mantels auf dem oberen Abschnitt aus Metall, nachstehend auch als Metallschaft bezeichnet, oder durch elektrisch leitende Verbindung mit letzterem erfolgen. In diesem Fall ist der Mantel zweckmässig aus einem Material mit hohem Schmelzpunkt und hoher Warmfestigkeit gebildet, so dass die Elektrode auch beim an sich unerwünschten seitlichen Ansetzen des Lichtbogens gewisse Notlaufeigenschaften

besitzt. Hierbei können zweckmässig Materialien
zum Einsatz gelangen, deren elektrische Leitfähigkeit geringer als die des die Stromzuführung bewirkenden innenliegenden Metallschaftes ist. Die
Elektrode besitzt somit in ihrem oberen Abschnitt
eine erste, aussenliegende, mechanisch resistente,
temperaturbeständige und hochwarmfeste Aussenhülle,
die lösbar aufgesetzt ist. Diese fängt die mechanischen und thermischen Belastungen, die bei der
Elektrostahlerzeugung auftreten können,
auf und gewährleistet hierdurch das Andauern des
Elektrodenvorganges über den innenliegenden inneren
Kern, der an die Stromzuführung angeschlossen ist.

In alternativer Weise ist es aber auch möglich,
den Mantel zu dem oberen Abschnitt elektrisch isolierend zu halten bzw. aufzusetzen. In einem solchen Fall kann es zweckmässig sein, den gegenüber
dem oberen Abschnitt elektrisch isolierend gehaltenen Mantel auf Erdpotential zu halten.

Unabhängig von der Art der isolierenden oder
elektrisch leitenden Verbindung von Mantel mit dem
Metallschaft, kann diese durch Zwischenstücke
oder auch Abstandshalter erfolgen. Diese werden bevorzugt aus temperaturbeständigem Material gewählt.
Dabei kann es auch günstig sein, wenn dieses Material thermisch schlecht leitfähig ist. Der Mantel
kann aber auch durch eine homogene oder rasterförmig aufgetragene Zwischenschicht auf dem Metallschaft getragen sein, die keine unlösbare oder
schlecht lösbare Verbindung mit dem Mantel ergibt. Die Zwischenschicht kann, je nachdem, ob der Mantel auf Elektrodenpotential oder auf Erdpotential gehalten werden soll, elektrisch leitfähig, was besonders bevorzugt ist, oder elektrisch isolierend sein. Als besonders günstig hat sich die Wahl elastischer bzw. federnder Zwischenschichten erwiesen, die den Vibrationen und anderen mechanischen Beanspruchungen der Elektrode besonders gut Rechnung zu tragen vermögen.

Im übrigen ist es auch möglich, den Mantel in Ausstülpungen oder Ausnehmungen des oberen Abschnittes einzuhängen. Andererseits haben sich konstruktive Lösungen, bei denen der innere Kern mit dem äusseren Mantel durch ein oder mehrere Gewinde oder durch die Ausbildung als Einpasstück verbunden ist, besonders bewährt, zumal im Falle auftretender Reparaturen auch eine leichte Trennung möglich ist. In zweckmässiger Weise kann bei der Ausbildung von Mantel und Metallschaft als Passtücke ein Teilgewinde vorgesehen sein.

Der Mantel kann auch ein Kühlsystem aufweisen. So können Kühlnuten zur Gaskühlung, aber auch ein Flüssigkeitskreislauf vorgesehen sein. Im letzteren Fall kann der Mantel beispielsweise ein doppelwandiges Rohr darstellen, in dem Flüssigkeit zu- und abgeführt wird. Dies kann offensichtlich auf verschiedenartige Weise geschehen, beispielsweise durch axiale oder wendelförmige Führung von Kühlkanälen etc.. Beispielsweise kann der Mantel ein den oberen Abschnitt umgebendes Rohr aus hochschmelzendem, hochwarmfesten Stahl darstellen, der von Kühlkanälen durchzogen ist, wobei das Stahlrohr auf dem Metallschaft, der vorzugsweise aus Kupfer besteht, gelagert ist.

Es ist besonders günstig, den Mantel um die Stirnfläche des oberen Abschnittes zumindest teilweise herumzuziehen, um letzteren vor dem direkten Angriff des Lichtbogens und damit der Aufschmelzung zu schützen. Hierbei kann der um die Stirnfläche herumgezogene Mantelabschnitt den verbrauchbaren unteren Abschnitt, der im allgemeinen aus Graphit besteht, leitend berühren oder nur einen geringen Abstand hiervon haben. Hierdurch kann erreicht werden, dass bei einer seitlichen Wanderung des Lichtbogens dieser auf dem äusseren Mantel, nicht aber auf der Stirnfläche des oberen Abschnittes auftrifft. Gegebenenfalls kann der Mantel zum zusätzlichen Schutz der Stirnfläche des oberen Abschnittes zu dem verbrauchbaren Abschnitt der Elektrode einen isolierenden Einsatz besitzen, beispielsweise einen Keramikring, etc..

Zwischen dem Mantel und dem Metall des oberen Abschnittes kann mit Vorteil auch eine Zwischenschicht vorgesehen sein. Diese Zwischenschicht kann in Abhängigkeit davon, ob der aussenliegende Mantel auf dem Potential der Elektrode oder auf Erdpotential gehalten werden soll, elektrisch leitfähig oder elektrisch isolierend sein. Durch die Zwischenschicht kann entweder alternativ oder zusätzlich zu den sonst vorgesehenen Halterungen oder Zwischenstücken eine noch bessere Abstützung des Mantels auf dem Metallschaft erfolgen. Die Zwischenschicht kann den gesamten Raum zwischen Mantel und Metall des oberen Abschnittes bedecken, alternativ aber auch nur in Teilbereichen vorhanden sein. Dabei ist nicht nur an eine Aufbringung der Zwischenschicht in Rasterform, sondern mit besonderem Vorteil daran gedacht, den Mantel an Bereichen besonderer Beanspruchung ggf. kontinuierlich abzustützen. Eine besonders günstige Ausführungsform der Erfindung ist auf die Vorsehung von Materialien gerichtet, die elastische bzw. federnde Eigenschaften besitzen. Als solche Materialien können z.B. Kohlenstoffasern, Kohlenstoffkordeln, Kohlenstoffpulver, Graphitfolien oder eine Kombination hiervon vorgesehen sein, wobei diese Materialien eine elektrisch leitende Zwischenschicht ergeben.

Wenn es gewünscht ist, die Zwischenschicht elektrisch isolierend auszulegen, können beispielsweise nichtleitende keramische Fasern, Glasfasern, etc. zum Einsatz kommen. Als weiteres günstiges Material für die Zwischenschicht können Kunstharze dienen, die für einen elastischen Sitz des Mantels auf dem Metallschaft der Kombinationselektrode sorgen können. Verwendbare Kunstharze sind z.B. solche, wie sie beispielsweise für die Herstellung der Isolierteile von Hochspannungsschaltern oder auch als Basis für gedruckte

Schaltungen etc. bekannt sind. Natürlich ist es auch möglich, Kombinationen solcher Materialien zu verwenden, wobei sich dies nach der Art des Mantels, der Beanspruchung der Elektrode und deren Auslegung richten kann. So ist beispielsweise der Einsatz von hochtemperaturfestem, leitenden Filz bzw. derartigen Fasern, Vliesen oder Geweben, insbesondere bei solchen Anwendungszwecken bevorzugt, wo die Elektrode im Betrieb mechanischen Erschütterungen oder Vibrationen ausgesetzt ist, so dass es darauf ankommt, den aussenliegenden Mantel elastisch und elektrisch leitend abzufangen, was zur zusätzlichen Stabilisierung der Elektrode beiträgt.

Nach einer besonders bevorzugten Ausführungsform der Erfindung ist der Mantel aus einer Mehrzahl von Elementen, insbesondere Segmenten, gebildet. Diese können eine Serie von Rohrabschnitten, Halbschalen oder dergleichen umfassen, die zumindest den unteren Bereich des oberen Abschnittes der Elektrode bis in den Bereich des Schraubnippels, gegebenenfalls darüber hinaus, umgeben. Der Einsatz von im wesentlichen rohrförmigen Abschnitten ist besonders bevorzugt. Dabei kann es günstig sein, wenn die Einzelsegmente aufeinander aufsitzen, so dass im Falle des Bruches oder Ausfallen eines untenliegenden Segmentes die oberen in die Zone besonderer Beanspruchung nachrutschen können. In einem solchen Fall ist es zweckmässig, lediglich das unterste Segment des Mantels auf dem Metallschaft oder auf Halterungen bzw.

Zwischenstücken zu lagern, so dass die darüberliegenden Segmente frei beweglich sind.

Bei einer anderen Ausführungsform der Elektrode ist es besonders bevorzugt, dass der Mantel aus Segmenten besteht, wobei jedes einzelne Segment über ein Gewinde mit dem Metall des oberen Abschnittes verbunden ist. Hierdurch kann eine besonders feste, leicht lösbare aber dennoch stabile Auflage der Segmente auf dem Metall des oberen Abschnittes erreicht werden. Durch diese Anordnung ist es auch möglich, die Segmente bzw. Rohrabschnitte des Mantels sukzessive von unten nach oben durch eine entsprechende Schraubbewegung zu verschieben. Dies hat den Zweck, die unteren, einem stärkeren Verschleiß unterliegenden Segmente, die zwar schon etwas angegriffen sind, zum Schutz des oberen Teils des Metallschafts aber noch geeignet sind, nach oben zu bewegen und von unten her neue oder früher am oberen Teil des Metallschafts angebrachte Segmente bzw. Rohrabschnitte an dem unteren Teil des Metallschafts anzuordnen. Hierfür muß das Gewinde lediglich eine geeignete Ausbildung haben. Es wird durch diese Maßnahme der Vorteil erreicht, dass die Rohrabschnitte bzw. Segmente des Mantels möglichst lange und materialsparend eingesetzt werden können.

Es ist günstig, die Stirnflächen der Segmente zu profilieren oder in anderer Weise Rechnung zu tragen, daß die Segmente den Kern gut abdecken. Dies kann dadurch erreicht werden, dass die Stirnflächen der Segmente ineinander eingreifen bzw. diese profiliert sind. Durch die Profilierung soll insbesondere eine Labyrinthdichtung des Mantels erfolgen.

Nach einer bevorzugten Ausführungsform der Erfindung weist die Profilierung des einen Segmentes zumindest eine ringförmige Erhebung auf, die in eine Ringnut der Profilierung des benachbarten Segmentes eingreift. Dabei hat es sich als besonders geeignet erwiesen, wenn die ringförmige Erhebung des einen Segmentes als auch die ringförmige Nut des benachbarten Segmentes im Querschnitt etwa trapezförmig ausgestaltet sind.

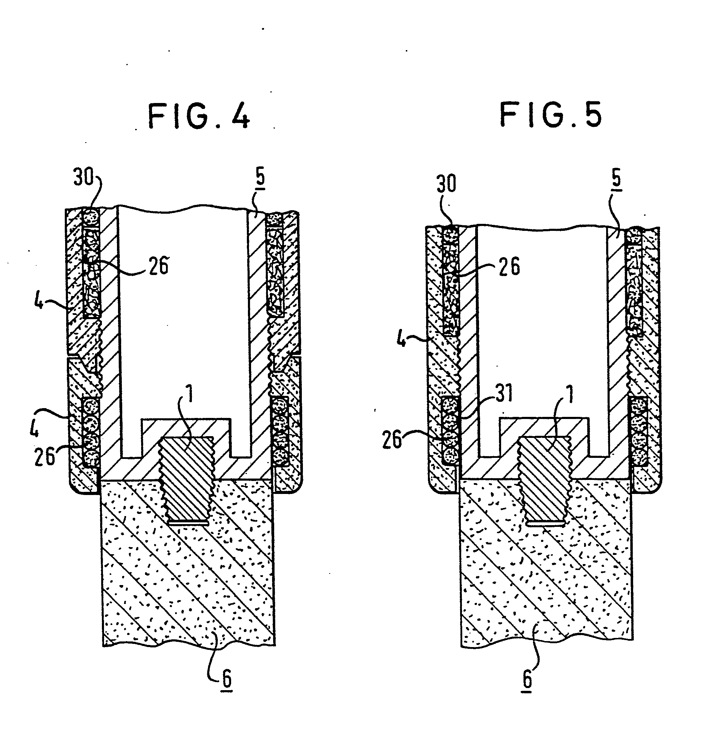

Mit Vorteil sind die Einzelsegmente derart ausgebildet, dass an ihrer Innenfläche Ausnehmungen entstehen. Diese sind insbesondere ringförmig. In die ringförmigen Ausnehmungen können die Materialien der elektrisch leitenden bzw. der elektrisch isolierenden Zwischenschicht eingebracht werden. In diese Ausnehmungen werden mit Vorteil Kohlenstoffasern bzw. -filze, -kordeln gegebenenfalls in Kombination mit Graphitfolien eingebracht, wodurch die über ein Gewinde mit dem Kern verbundenen Einzelsegmente besonders elastisch gelagert werden. Bei derartigen Ausführungsformen ist es insbesondere im Rahmen der Erfindung günstig, wenn die Segmente aus Graphit gebildet sind. Derartige Ausführungsformen des erfindungsgemäss vorgesehenen Mantels sind in den Fig. 4 bis 6 dargestellt, auf die bereits hier zu diesem Zweck ausdrücklich verwiesen wird.

Für manche Anwendungszwecke ist es besonders günstig, wenn das den Mantel bzw. dessen Segment bildende Kohlenstoffmaterial imprägniert ist.

Es ist im übrigen auch möglich, dass der bzw. dessen Segmente ein hochtemperaturbeständiges Coating aufweisen.

Erfindungsgemäss ist besonders eine Elektrode bevorzugt, bei der im unteren Bereich des Metallschaftes, an den sich das Aktivteil anschliesst,der Mantel in Einzelsegmente aufgeteilt ist, die mit Vorzug aus Graphit bestehen und wobei zwischen den Graphitsegmenten und dem Metallschaft durch die Einfügung von leitendem Gewebe oder Filz eine Abpufferung erfolgt ist. An die Segmente kann sich in Richtung des oberen Teils des Metallschaftes eine Feuerfestmasse, die beispielsweise durch Torkretieren aufgebracht ist, anschliessen. Eine zusätzliche Haftung der Feuerfestmasse kann sich durch die Einbringung von Halterungen, z.B. angeschweissten hexagonalen Gitterstücken, etc.,ergeben. Hierbei wird im Regelfall darauf geachtet, dass die Halterungen durch die Feuerfestschicht mit abgedeckt sind.

Durch die erfindungsgemässe Ausgestaltung des Schutzüberzugs wird eine Reihe von Vorteilen erzielt. Insbesondere wird ein besonders wirksamer Schutz des Übergangsbereiches des wassergekühlten Metallschaftes zu dem Aktivteil aus Graphit erzielt. Die erfindungsgemässe Ausbildung des Mantels als lösbares Formteil, das elektrisch leitfähig ist und segmentiert sein kann, trägt der thermischen Wechselbeanspruchung und der mechanischen Belastung, insbesondere aber auch der Vibration, besonders gut Rechnung. Durch die Wahl elektrisch leitfähiger Materialien mit guter mechanischer Stabilität und insbesondere deren konstruktive Ausbildung und Befestigung am Metallschaft ergibt sich eine hohe Betriebssicherheit und Lebensdauer der Kombinationselektrode. Durch die separate Ausbildung eines lösbar aufgesetzten Mantels, insbesondere in formschlüssiger Segmentform, vorteilhaft aus Graphit, ist es auch möglich, die Befestigungseinrichtungen an dem Metallschaft in Zonen geringerer Beanspruchung zu legen und dadurch einem Bruch des Mantelmaterials, z.B. Graphits, in diesem Bereich bestmöglich vorzubeugen.

Einige Ausführungsformen der Erfindung, die besonders bevorzugt sind, werden nachstehend in den Figuren veranschaulicht. Es zeigen:

Fig. 1      einen Längsschnitt durch einen erfindungsgemässen Elektrodentyp,

Fig. 2      einen Längsschnitt durch eine andere Ausführungsform einer erfindungsgemässen Elektrode,

Fig. 3      einen Längsschnitt im Übergangsbereich einer Elektrode,

Fig. 4-6    schematische Darstellungen der segmentierten Ausbildung des Mantels in einem Teillängsschnitt.

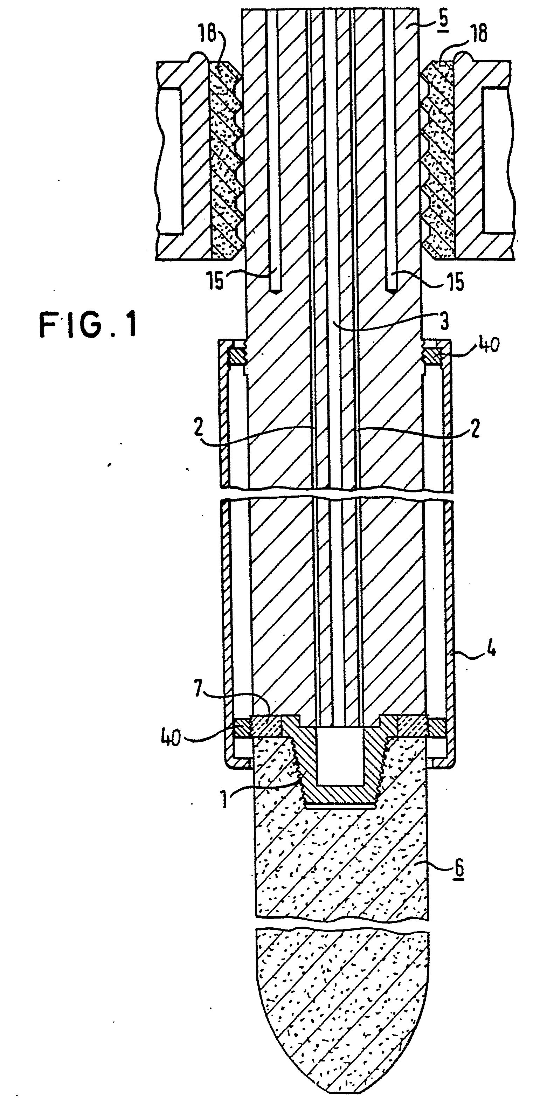

Bei der Elektrode gemäss Fig. 1 wird das Kühlmedium, im Regelfall Wasser, durch den Vorlaufkanal 2 ein- und durch den Rücklaufkanal 3 zurückgeführt. Dabei tritt das Kühlmedium auch in eine Kammer innerhalb des Schraubnippels 1 ein. Der obere Abschnitt 5, im Regelfall aus Kupfer oder einem anderen hochleitfähigen Metall, ist durch einen ringförmig ausgebildeten Mantel 4 umgeben, der den unteren Bereich des Metallschaftes in einem Abstand umgibt. An dem Metallschaft ist er über eine Gewindescheibe 40 angeschraubt. Im unteren Bereich des Metallschaftes ist der Mantel 4 über ein Zwischenstück 7 auf Abstand gehalten, an das sich eine weitere Gewindescheibe 40 anschliesst.

Im oberen Bereich des Metallschaftes sind Backen 18 der Stromzuführung dargestellt, während in dem Metallschaft eingezogene Kühlbohrungen 15 vorgesehen sind.

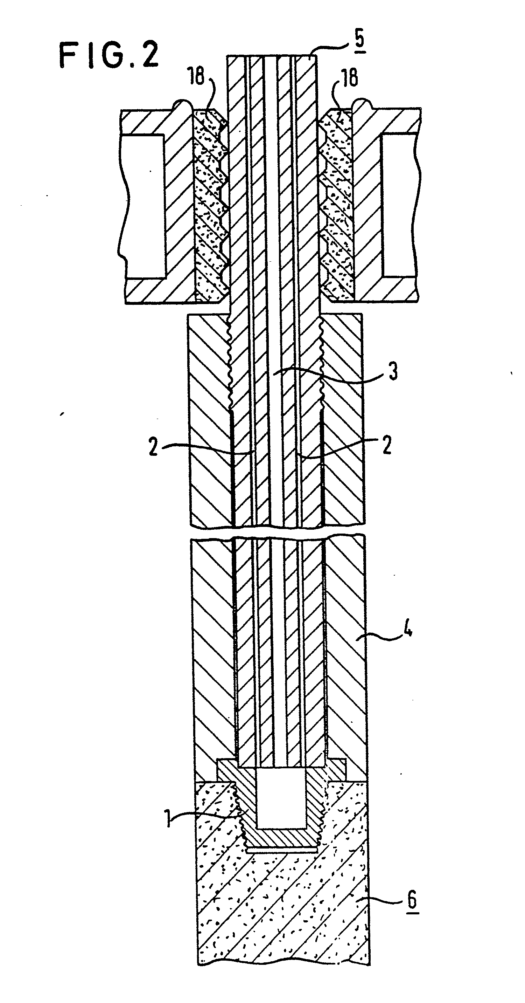

In Fig. 2 ist der Mantel als ein unter der Stromzuführung 18 beginnendes Einpasstück dargestellt, der in seinem oberen Bereich zusätzlich mit einem Gewinde mit dem innenliegenden Metallschaft, der das Kühlsystem 2, 3 trägt, verschraubt ist. Während für den innenliegenden, stromzuführenden Schaft ein hochleitfähiges Metall, z.B. Kupfer, Verwendung findet, ist es möglich, den schützenden Aussenmantel aus einem mechanisch sehr robusten Material mit hohem Schmelzpunkt und guter Warmfestigkeit auszubilden. Die elektrische Leitfähigkeit des Aussenmantels kann erheblich geringer als die des innenliegenden Metallschaftes sein, da dessen Leitfähigkeit lediglich zur Verleihung von Notlaufeigenschaften dienen muss. Erfindungsgemäss ist es möglich, in die Ausnehmung zwischen innenliegendem Metallschaft und aussenliegendem Mantel ein pufferndes Material, wie Filz, Vliese aus keramischer Faser oder Kohlenstoff, bzw. Graphitfolie einzubringen, was aber in Fig. 2 nicht gezeigt ist.

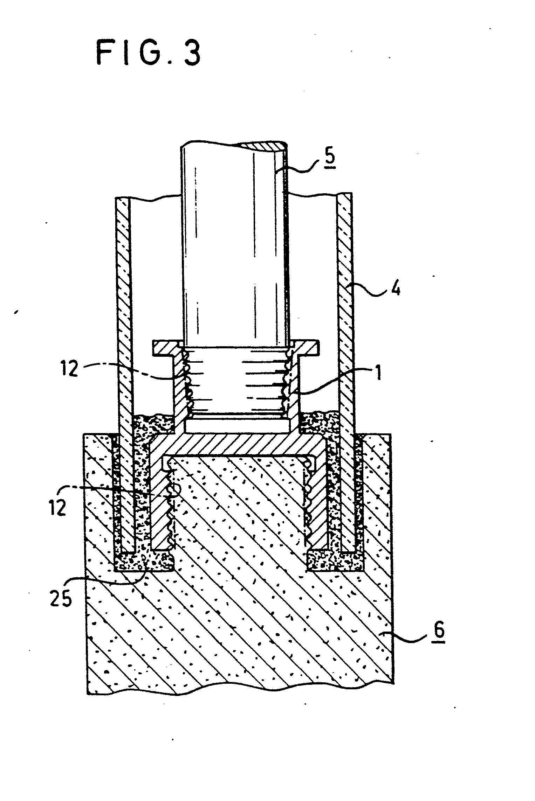

In Fig. 3 ist ein Teilausschnitt im Bereich der Nippelverbindung von Metallschaft 5 mit Aktivteil 6 gezeigt, wobei die jeweiligen Gewinde mit einer die Leitfähigkeit erhöhenden Beschichtung 12 versehen sind. Der elektrisch leitfähige Mantel 4 ist wiederum als Rohr ausgebildet, das neben einer nicht gezeigten Befestigung am Schaft 5 auch zusätzlich in einer Ausnehmung des Aktivteiles 6 abgestützt ist. In der Ausnehmung ist eine hochtemperaturbeständige Masse 25 eingebracht, die - je nach Auslegung der Elektrode - elektrisch leitfähig oder isolierend sein kann.

In Fig. 4 ist die besonders bevorzugte Ausbildung von Einzelsegmenten des Mantels 4 gezeigt. Die Einzelsegmente sind über ein Gewinde mit der Aussenwand des Metallschaftes 5 verschraubt. Die Segmente sind an den Stirnflächen trapezförmig ausgebildet und ergeben dadurch eine Labyrinthdichtung. In Ausnehmungen auf der Innenfläche der Segmente sind Kohlenstoffkordeln und auch Kohlenstoffilze 26 eingebracht. Die Ausbildung des Mantels 4 bzw. der Einzelsegmente kann unterschiedlich sein.

In Fig. 5 ist ein Segment gezeigt, das über ein mittig angebrachtes Gewinde auf den Metallschaft 5 aufgeschraubt ist. In Ausnehmungen an der Innenfläche der Segmente sind elastische bzw. federnde Materialien, z.B. Glasfasern 26 bzw. Gummiringe 30, eingezogen. Auch kann zusätzlich eine Graphitfolie 31 vorgesehen sein.

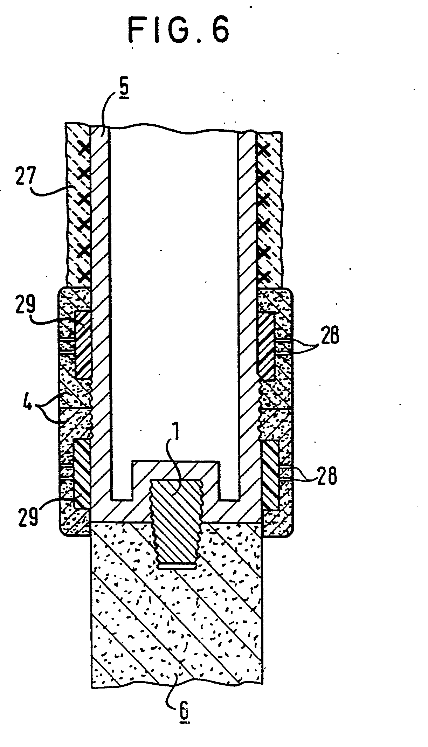

In Fig. 6 sind wiederum etwas anders ausgebildete Profile gezeigt, in deren Innenräumen, bzw. über Bohrungen 28, eingespritzte Kunstharzmasse eingeführt und in situ kondensiert sein kann. Im oberen
Bereich des Metallschaftes ist eine feuerfeste
Masse auf Hexagittern 27 auftorkretiert.

Als mechanisch resistentes Material für den Mantel,
das elektrisch leitfähig ist, können insbesondere
solche mit hohem Schmelzpunkt und hoher Warmfestigkeit, aber auch Temperaturwechselbeständigkeit
Verwendung finden. Die Materialien können unter
anderem unter Stahl hoher Warmfestigkeit, Übergangsmetallen und insbesondere deren Metallegierungen ausgewählt werden. In Einzelfällen können
auch Carbide, Nitride bzw. Oxide solcher Metalle
geeignet sein.

Als "mechanisch resistentes" Material im Sinne der
Erfindung kann aber auch Graphit dienen, insbesondere wenn dieser imprägniert ist und/oder durch die
beschriebene spezielle konstruktive Ausgestaltung in
Einzelsegmenten und vorteilhaft durch eine elastische
Zwischenschicht, aber auch gegebenenfalls durch die
Dimensionierung auf eine mechanische Beanspruchung
hin besonders konditioniert ist.

0056862

Patentansprüche:

1.      Elektrode für Lichtbogenöfen aus einem
oberen Abschnitt (5) aus Metall und einem ersetzbaren unteren Abschnitt (6) aus sich verbrauchendem bzw. langsam sich verbrauchendem Material, die
durch einen Schraubnippel (1) oder dergleichen
miteinander verbunden sind, wobei der obere Abschnitt eine Flüssigkeits-Kühleinrichtung mit
einem Vorlaufkanal (2) und einem Rücklaufkanal (3)
aufweist und der obere Abschnitt (5) zumindest
teilweise, vorzugsweise in dessen unterem Bereich,
einen Schutzüberzug aufweist, dadurch  g e -
k e n n z e i c h n e t ,  dass der Schutzüberzug
einen lösbar aufgesetzten Mantel (4) aus mechanisch resistentem Material darstellt, das elektrisch
leitfähig ist.

2.      Elektrode nach Anspruch 1, dadurch
g e k e n n z e i c h n e t ,  dass der Mantel (4)
auf dem elektrischen Potential der Elektrode gehalten ist.

3.      Elektrode nach Anspruch 1, dadurch
g e k e n n z e i c h n e t ,  dass der Mantel (4)
zu dem oberen Abschnitt (5) elektrisch isolierend
gehalten bzw. aufgesetzt ist.

4.      Elektrode nach Anspruch 1, dadurch
g e k e n n z e i c h n e t ,  dass der Mantel (4)
gekühlt ist.

5.      Elektrode nach einem oder mehreren der vorhergehenden Ansprüche, dadurch g e k e n n - z e i c h n e t , dass der Mantel (4) ein aus Vorlauf- und Rücklaufkanal bestehendes Kühlungssystem aufweist.

6.      Elektrode nach einem oder mehreren der vorhergehenden Ansprüche, dadurch g e k e n n - z e i c h n e t , dass der Mantel (4) an dem Metallschaft durch Zwischenstücke (7) oder Abstandshalter (40) befestigt ist.

7.      Elektrode nach einem oder mehreren der vorhergehenden Ansprüche, dadurch g e k e n n - z e i c h n e t , dass der Mantel (4) in einer Ausnehmung des oberen Abschnitts isolierend eingehängt ist.

8.      Elektrode nach einem oder mehreren der vorhergehenden Ansprüche, dadurch g e k e n n - z e i c h n e t , dass das Kühlsystem des Mantels (4) unabhängig von dem des oberen Abschnitts (5) ist.

9.      Elektrode nach einem oder mehreren der vorhergehenden Ansprüche, dadurch g e k e n n - z e i c h n e t , dass der Mantel (4) ein Formteil darstellt, das lösbar an dem oberen Abschnitt (5) der Elektrode befestigt ist.

10.      Elektrode nach einem oder mehreren der

vorhergehenden Ansprüche, dadurch g e k e n n - z e i c h n e t , dass die Zwischenstücke (7) oder Abstandshalter (40) aus temperaturbeständigem Material bestehen.

11.     Elektrode nach Anspruch 10, dadurch g e k e n n z e i c h n e t , dass die Zwischen- stücke (7) oder Abstandshalter (40) aus thermisch schlecht leitfähigem Material bestehen.

12.     Elektrode nach einem oder mehreren der vorhergehenden Ansprüche, dadurch g e k e n n - z e i c h n e t , dass der Mantel (4) ein aufgesetztes, wassergekühltes Rohr darstellt.

13.     Elektrode nach einem oder mehreren der vorhergehenden Ansprüche, dadurch g e k e n n - z e i c h n e t , dass der Mantel (4) um die untere Stirnfläche des oberen Abschnitts (5) teilweise herumgezogen ist.

14.     Elektrode nach Anspruch 13, dadurch g e k e n n z e i c h n e t , dass der um die Stirnfläche herumgezogene Mantelabschnitt den unteren Abschnitt (6) elektrisch leitend berührt oder nur einen geringen Abstand hiervon hat.

15.     Elektrode nach einem oder mehreren der vorhergehenden Ansprüche, dadurch g e k e n n - z e i c h n e t , dass der Mantel (4) aus mehreren Bauteilen oder Segmenten besteht.

16.      Elektrode nach einem oder mehreren der
vorhergehenden Ansprüche, insbesondere nach Anspruch 3, dadurch g e k e n n z e i c h n e t ,
dass der Mantel (4) im Bereich des unteren Abschnitts (6) von diesem durch eine Isoliereinheit
abgetrennt ist.

17.      Elektrode nach Anspruch 16, dadurch
g e k e n n z e i c h n e t , dass die Isoliereinheit einen Keramikring darstellt.

18.      Eleketrode nach Anspruch 1 oder 2, dadurch
g e k e n n z e i c h n e t , dass eine Zwischenschicht (26) vorgesehen ist.

19.      Elektrode nach Anspruch 18, dadurch
g e k e n n z e i c h n e t , dass die Zwischenschicht (26) aus elastischem Material gebildet ist.

20.      Elektrode nach Anspruch 19, dadurch
g e k e n n z e i c h n e t , dass die Zwischenschicht (26) aus elektrisch leitfähigem Material
gebildet ist.

21.      Elektrode nach einem oder mehreren der
vorhergehenden Ansprüche, dadurch g e k e n n -
z e i c h n e t , dass der Mantel bzw. die Segmente (4) über ein Gewinde mit dem oberen Abschnitt
(5) verbunden sind.

22.      Elektrode nach einem oder mehreren der
vorhergehenden Ansprüche, dadurch g e k e n n -
z e i c h n e t , dass der Mantel bzw. dessen
Segmente (4) aus einem Übergangsmetall, Stahl, einer
Metallegierung oder Metallverbindung . mit hohem
Schmelzpunkt und hoher Warmfestigkeit oder Kohlenstoffmaterialien, die gegebenenfalls imprägniert
sind, gebildet sind.

23.      Elektrode nach einem oder mehreren der
vorhergehenden Ansprüche, dadurch g e k e n n -
z e i c h n e t , dass die Stirnflächen der
Segmente (4) profiliert sind.

24.      Elektrode nach einem oder mehreren der
vorhergehenden Ansprüche, dadurch g e k e n n -
z e i c h n e t , dass die Profilierung des
einen Segmentes (4) zumindest eine ringförmige
Erhebung aufweist, die in eine Ringnut der Profilierung des benachbarten Segmentes (4) eingreift.

25.      Elektrode nach einem oder mehreren der
vorhergehenden Ansprüche, dadurch g e k e n n -
z e i c h n e t , dass die Segmente (4) an ihrer
Innenfläche eine oder mehrere ringförmige Ausnehmungen aufweisen.

26.      Elektrode nach einem oder mehreren der

vorhergehenden Ansprüche, dadurch g e k e n n - z e i c h n e t , dass sowohl die ringförmige Erhebung des einen Segmentes (4) als auch die ringförmige Nut des benachbarten Segmentes (4) im Querschnitt etwa trapezförmig ausgestaltet sind.

27. Elektrode nach einem oder mehreren der vorhergehenden Ansprüche, dadurch g e k e n n - z e i c h n e t , dass der Mantel bzw. dessen Segmente (4) ein hochtemperaturbeständiges Coating aufweisen.

28. Elektrode nach einem oder mehreren der vorhergehenden Ansprüche, dadurch g e k e n n - z e i c h n e t , dass zwischen den Segmenten (4) und dem Metall des oberen Abschnittes (5) Graphit, Kohlenstoffkordel, Graphitfolie oder eine Kombination hiervon eingebracht ist.

29. Elektrode nach einem oder mehreren der vorhergehenden Ansprüche, dadurch g e k e n n - z e i c h n e t , dass zwischen den Segmenten (4) und dem Metall des oberen Abschnittes (5) Kunstharz eingebracht ist.

30. Elektrode nach einem oder mehreren der vorhergehenden Ansprüche, dadurch g e k e n n - z e i c h n e t , dass der Schutzüberzug aus torkretisierter Feuerfestmasse (30) im oberen Bereich des oberen Abschnittes (5) und hieran anschliessend aus Segmenten (4) aus Graphit gebildet ist.

FIG.1

FIG.2

FIG. 3

# FIG.4

# FIG.5

# FIG.6